# EUROPEAN PATENT APPLICATION

(11) **EP 1 535 975 A1**
(43) Date of publication of application: **01.06.2005**
(21) Application number: 03792657.3
(22) Date of filing: 07.08.2003
(51) Int. Cl.: C09D 183/04, C09D 183/12, C09D 185/00

(54) **COATING COMPOSITION**

(30) Priority: 21.08.2002 JP 2002241028
(71) Applicant: JSR Corporation, Tokyo 104-8410 (JP)
(72) Inventor: KANAMORI, Tarou, c/o JSR CORPORATION, Chuo-ku, Tokyo 104-8410 (JP); YOSHIMURA, Nakaatsu, c/o JSR CORPORATION, Chuo-ku, Tokyo 104-8410 (JP); NISHIKAWA, Akira, c/o JSR CORPORATION, Chuo-ku, Tokyo 104-8410 (JP)
(74) Representative: Vollnhals, Aurel
(86) International application number: PCT/JP2003/010066
(87) International publication number: WO 2004/018579

(57) **Abstract**

Coating compositions are silane-based coating compositions containing (a) fine metal particles and/or fine metal oxide particles, and (b) a titanium compound of specific structure and/or (d) an organosiloxane oligomer of specific structure, and (c) a silane compound of specific structure. The silane-based coating compositions can give coating films having good dispersibility of fine particles (a) and high transparency even at high concentrations.

## Description

### FIELD OF THE INVENTION

The present invention relates to coating films having high transparency, in which fine particles are well dispersed, and to silane-based coating compositions capable of giving the coating films.

### BACKGROUND OF THE INVENTION

Coating materials containing fine metal particles and/or fine metal oxide particles have wide applications, including optical materials, catalyst materials, electronic materials and sensor materials. Silane-based binders provide higher durability as compared to organic binders, and are therefore suitably employed as binders for fine metal particles or fine metal oxide particles under conditions of, particularly, exposure to ultraviolet rays or high temperatures. For example, the silane-based coating materials containing fine metal oxide particles or the like are produced as follows:
(1) Fine metal particles and/or fine metal oxide particles are finely dispersed in a compatible solvent to give a sol, followed by mixing with a silane-based binder (Japanese Laid-open Publication No. 06-25600/1994).
(2) A hydrolyzable silane as a silane binder material, and fine metal particles and/or fine metal oxide particles are mixed together, and the hydrolyzable silane is polymerized in the presence of the fine metal particles and/or fine metal oxide particles (Japanese Laid-open Publication No. 2000-246114).

In these methods, however, dispersion stability deteriorates with an increase in the content of the fine metal particles and/or fine metal oxide particles. Consequently, the particles often aggregate to deteriorate transparency of the film. Therefore, such coating materials cannot be used in applications where transparency is required. The transparency becomes particularly poor when the content of the fine metal particles and/or fine metal oxide particles is above 25%.

### OBJECTS OF THE INVENTION

The present invention has been made to solve the above-described problems of the background art. It is therefore an object of the invention to provide silane-based coating compositions capable of giving coating films that contain fine metal particles and/or fine metal oxide particles in a well-dispersed state and that have high transparency. It is another object of the invention to provide coating films obtained from the coating compositions.

### SUMMARY OF THE INVENTION

The present inventors earnestly carried out studies in view of solving the aforesaid problems. As a result, it has been found that high contents of fine metal particles and/or fine metal oxide particles can be well dispersed in coating compositions containing a hydrolyzable silane, and a titanium compound of specific structure and/or an organosiloxane oligomer of specific structure, and that dry coating films obtained from these coating compositions have high transparency, to extent that the total light transmittance through the film 0.2 µm thick is 80% or above. The present invention has been accomplished based on these findings.

A first coating composition according to the present invention comprises:
(a) fine metal particles and/or fine metal oxide particles;
(b) at least one titanium compound selected from the group consisting of titanium alcoholates represented by the following formula (1), derivatives thereof, titanium acylates of the formula (1) and derivatives thereof:

   R¹ ₘTi(OR²)₄₋ₘ (1)

   wherein R¹ is an organic group of 1 to 8 carbon atoms and may be the same or different from each other when plural; R² is an organic group selected from the group consisting of alkyl groups of 1 to 6 carbon atoms, acyl groups of 1 to 6 carbon atoms and phenyl group, and may be the same or different from each other when plural; and m is an integer ranging from 0 to 3; and
(c) at least one silane compound selected from the group consisting of organosilanes represented by the following formula (2) and derivatives thereof:

   R³ ₙSi(OR⁴)₄₋ₙ (2)
wherein R³ is a monovalent organic group of 1 to 8 carbon atoms and may be the same or different from each other when plural; R⁴ is an alkyl group of 1 to 5 carbon atoms or an acyl group of 1 to 6 carbon atoms, and may be the same or different from each other when plural; and n is an integer ranging from 0 to 3.

A second coating composition according to the present invention comprises:
(a) fine metal particles and/or fine metal oxide particles;
(c) at least one silane compound selected from the group consisting of organosilanes represented by the following formula (2) and derivatives thereof:

   R³ ₙSi(OR⁴)₄₋ₙ (2)

   wherein R³ is a monovalent organic group of 1 to 8 carbon atoms and may be the same or different from each other when plural; R⁴ is an alkyl group of 1 to 5 carbon atoms or an acyl group of 1 to 6 carbon atoms, and may be the same or different from each other when plural; and n is an integer ranging from 0 to 3; and
(d) an organosiloxane oligomer that has an Si-O linkage and a weight-average molecular weight of 300 to 100,000, the organosiloxane oligomer containing a structure represented by the following formula (3):

   -(R⁵O)ₚ-(R⁶O)_{q}-R⁷ (3)
wherein R⁵ and R⁶ are each an alkyl group of 1 to 5 carbon atoms and may be the same or different from each other when plural; R⁷ is a hydrogen atom or an alkyl group of 1 to 5 carbon atoms; and p and q are numbers of which the total (p + q) should be 2 to 50.

A third coating composition according to the present invention comprises:
(a) fine metal particles and/or fine metal oxide particles;
(b) at least one titanium compound selected from the group consisting of titanium alcoholates represented by the following formula (1), derivatives thereof, titanium acylates of the formula (1) and derivatives thereof:

   R¹ ₘTi(OR²)₄₋ₘ (1)

   wherein R¹ is an organic group of 1 to 8 carbon atoms and may be the same or different from each other when plural; R² is an organic group selected from the group consisting of alkyl groups of 1 to 6 carbon atoms, acyl groups of 1 to 6 carbon atoms and phenyl group, and may be the same or different from each other when plural; and m is an integer ranging from 0 to 3;
(c) at least one silane compound selected from the group consisting of organosilanes represented by the following formula (2) and derivatives thereof:

   R³ ₙSi(OR⁴)₄₋ₙ (2)

   wherein R³ is a monovalent organic group of 1 to 8 carbon atoms and may be the same or different from each other when plural; R⁴ is an alkyl group of 1 to 5 carbon atoms or an acyl group of 1 to 6 carbon atoms, and may be the same or different from each other when plural; and n is an integer ranging from 0 to 3; and
(d) an organosiloxane oligomer that has an Si-O linkage and a weight-average molecular weight of 300 to 100,000, the organosiloxane oligomer containing a structure represented by the following formula (3):

   - (R⁵O)ₚ-(R⁶O)_{q}-R⁷ (3)
wherein R⁵ and R⁶ are each an alkyl group of 1 to 5 carbon atoms and may be the same or different from each other when plural; R⁷ is a hydrogen atom or an alkyl group of 1 to 5 carbon atoms; and p and q are numbers of which the total (p + q) should be 2 to 50.

Preferably, the first to third coating compositions further comprise a catalyst (f).

A coating film according to the present invention is obtained from any of the above coating compositions.

### PREFERRED EMBODIMENTS OF THE INVENTION

Hereinbelow, the components of the coating compositions of the present invention will be described in detail.

### (a) Fine metal particles and fine metal oxide particles:

The fine metal particles and fine metal oxide particles used in the invention (hereinafter, collectively the "fine particles (a)") may be in the form of dry particles, aqueous sol or colloid dispersed in water, or organic-solvent sol or colloid dispersed in a polar solvent such as alcohol or a nonpolar solvent such as toluene. When the fine particles (a) are in the form of organic-solvent sol or colloid, it may be diluted with water or an organic solvent according to the dispersed state of the particles (a). To achieve a more highly dispersed state, the fine particles (a) may be surface treated. The form of the fine particles (a) may be selected appropriately depending on desired characteristics of the coating film. When the fine particles (a) are in the form of sol or colloid, the solid concentration is preferably 40 wt% or less.

The primary particle diameters of the fine particles (a) are desirably not more than 200 nm, and preferably not more than 100 nm. When the primary particle diameters are larger than this, the coating film will have poor transparency, often to the extent that the total light transmittance through a dry coating film 0.2 µm thick is below 80%.

Specific examples of the fine particles (a) include SrTiO₃, FeTiO₃, WO₃, SnO₂, Bi₂O₃, In₂O₃, ZnO, Fe₂O₃, RuO₂, CdO, CdS, CdSe, GaP, GaAs, CdFeO₃, MoS₂, LaRhO₃, GaN, CdP, ZnS, ZnSe, ZnTe, Nb₂O₅, ZrO₂, InP, GaAsP, InGaAlP, AlGaAs, PbS, InAs, PbSe, InSb, SiO₂, Al₂O₃, AlGaAs, Al(OH)₃, Sb₂O₅, Si₃N₄, Sn-In₂O₃, Sb-In₂O₃, MgF, CeF₃, CeO₂, 3Al₂O₃·2SiO₂, BeO, SiC, AlN, Fe, Co, Co-FeOₓ, CrO₂, Fe₄N, BaTiO₃, BaO-Al₂O₃-SiO₂, Ba ferrite, SmCO₅, YCO₅, CeCO₅, PrCO₅, Sm₂CO₁₇, Nd₂Fe₁₄B, Al₄O₃, α-Si, SiN₄, CoO, Sb-SnO₂, Sb₂O₅, MnO₂, MnB, Co₃O₄, Co₃B, LiTaO₃, MgO, MgAl₂O₄, BeAl₂O₄, ZrSiO₄, ZnSb, PbTe, GeSi, FeSi₂, CrSi₂, CoSi₂, MnSi_{1.73}, Mg₂Si, β-B, BaC, BP, TiB₂, ZrB₂, HfB₂, Ru₂Si₃, TiO₂ (rutile type and anatase type), TiO₃, PbTiO₃, Al₂TiO₅, Zn₂SiO₄, Zr₂SiO₄, 2MgO₂-Al₂O₃-5SiO₂, Nb₂O₅, Li₂O-Al₂O₃-4SiO₂, Mg ferrite, Ni ferrite, Ni-Zn ferrite, Li ferrite and Sr ferrite. These compounds may be used singly or in combination of two or more kinds. Composites of the above compounds are also employable. Furthermore, the above compounds on which platinum or other metal is supported or which are modified with other elements are also usable.

Of the above compounds, the anatase TiO₂ is suitably used because its use leads to a photocatalytic coating film capable of decomposing organic substances or antifouling effect by rendering the fouling superhydrophilic.

Desirably, the fine particles (a) are contained in an amount of 1 to 90 wt%, preferably 15 to 85 wt%, and more preferably 25 to 80 wt% based on all the solid components in the coating composition. If the amount of the fine particles (a) is below the lower limit based on all the solid components in the coating composition, characteristics of the fine particles (a) are not expressed. If the amount exceeds the upper limit, film-forming properties are often deteriorated because of occurrence of chalking or the like in the forming of the coating film.

### (b) Titanium compound:

The titanium compound (b) used in the invention is at least one titanium compound that are selected from the group consisting of titanium alcoholates represented by the following formula (1), derivatives thereof, titanium acylates of the formula (1) and derivatives thereof:

R¹ ₘTi(OR²)₄₋ₘ (1)

wherein R¹ is an organic group of 1 to 8 carbon atoms and may be the same or different from each other when plural; R² is an organic group selected from the group consisting of alkyl groups of 1 to 6 carbon atoms, acyl groups of 1 to 6 carbon atoms and phenyl group, and may be the same or different from each other when plural; and m is an integer ranging from 0 to 3.

The titanium alcoholate derivatives include hydrolysates, condensates and chelates of the titanium alcoholates, and hydrolysates and condensates of the titanium alcoholate chelates.

The titanium acylate derivatives include hydrolysates, condensates and chelates of the titanium acylates, and hydrolysates and condensates of the titanium acylate chelates.

The titanium compounds may be used singly or in combination of arbitrary two or more kinds.

In the formula (1), R¹ denotes an organic group of 1 to 8 carbon atoms. Specific examples thereof include:
alkyl groups such as methyl, ethyl, n-propyl, i-propyl, n-butyl, sec-butyl, t-butyl, n-pentyl, n-hexyl, n-heptyl, n-octyl and 2-ethylhexyl groups;
acyl groups such as acetyl, propionyl, butyryl, valeryl, benzoyl, toluoyl and caproyl groups; and
vinyl, allyl, cyclohexyl, phenyl, epoxy, glycidyl, (meth) acryloxy, ureido, amido, fluoroacetamido and isocyanato groups.

Examples of R¹ further include substitution derivatives of the above organic groups. The substituents of the substitution derivatives indicated by R¹ include halogen atoms, substituted or unsubstituted amino group, hydroxyl group, mercapto group, isocyanato group, glycidoxy group, 3, 4-epoxycyclohexyl group, (meth) acryloxy group, ureido group and ammonium bases. Preferably, the substitution derivatives as R¹ have up to 8 carbon atoms including those of the substituents.

When plural, R¹ in the formula (1) may be the same or different from each other.

The alkyl groups of 1 to 6 carbon atoms indicated by R² include methyl, ethyl, n-propyl, i-propyl, n-butyl, i-butyl, sec-butyl, t-butyl, n-hexyl, n-heptyl, n-octyl and 2-ethylhexyl groups.

The acyl groups of 1 to 6 carbon atoms indicated by R² include acetyl, propionyl, butyryl, valeryl, benzoyl, toluoyl and caproyl groups.

When plural, R² in the formula (1) may be the same or different from each other.

The titanium alcoholate chelates can be obtained by reacting the titanium alcoholate with at least one compound (hereinafter, the chelating agent(s)) selected from the group consisting of β-diketones, β-ketoesters, hydroxycarboxylic acids, hydroxycarboxylic acid salts, hydroxycarboxylates, ketoalcohols and aminoalcohols. The titanium acylate chelates can be obtained by reacting the titanium acylate with the chelating agent(s). Of the above chelating agents, the β-diketones and β-ketoesters are preferably used. Specific examples thereof are acetylacetone, methyl acetoacetate, ethyl acetoacetate, n-propyl acetoacetate, i-propyl acetoacetate, n-butyl acetoacetate, sec-butyl acetoacetate, t-butyl acetoacetate, 2,4-hexane-dione, 2,4-heptane-dione, 3,5-heptane-dione, 2,4-octane-dione, 2,4-nonane-dione and 5-methyl-hexane-dione.

Specific examples of the titanium alcoholates and chelates thereof include tetra-i-propoxytitanium, tetra-n-butoxytitanium, tetra-t-butoxytitanium, di-i-propoxy bis(ethyl acetoacetato)titanium, di-i-propoxy bis(acetylacetato)titanium, di-i-propoxy bis(lactato)titanium, di-i-propoxy bis(acetylacetonato)titanium, di-n-butoxy bis(triethanolaminato)titanium, di-n-butoxy bis(acetylacetonato)titanium and tetrakis(2-ethylhexyloxy)titanium.

Of these, tetra-i-propoxytitanium, tetra-n-butoxytitanium, tetra-t-butoxytitanium, di-i-propoxy bis(acetylacetonato)titanium and di-n-butoxy bis(acetylacetonato)titanium are preferred.

Specific examples of the titanium acylates and chelates thereof include dihydroxy titanium dibutylate, di-i-propoxy titanium diacetate, bis(acetylacetonato) titanium diacetate, bis(acetylacetonato) titanium dipropionate, di-i-propoxy titanium dipropionate, di-i-propoxy titanium dimalonate, di-i-propoxy titanium dibenzoylate, di-n-butoxy zirconium diacetate and di-i-propylaluminum monomalonate. Of these, dihydroxy titanium dibutylate and di-i-propoxy titanium diacetate are preferred.

In the hydrolysates of the titanium alcoholates, titanium alcoholate chelates, titanium acylates and titanium acylate chelates, at least one OR² group in the titanium alcoholate or titanium acylate has only to be hydrolyzed. That is, these hydrolysates have one hydrolyzed OR² group, or two or more hydrolyzed OR² groups. Mixtures of such hydrolysates are also possible.

The condensates of the titanium alcoholates, titanium alcoholate chelates, titanium acylates and titanium acylate chelates occur when in the hydrolysates of the titanium alcoholates, titanium alcoholate chelates, titanium acylates and titanium acylate chelates, the Ti-OH groups are condensed into Ti-O-Ti linkages. In the present invention, it is not necessary that all the Ti-OH groups be condensed. The condensates include those in which a few of the Ti-OH groups are condensed, those in which most of (or all) the Ti-OH groups are condensed, and mixtures of condensates in which both Ti-OR groups and Ti-OH groups are present.

In the invention, the condensates are more preferable for use as the titanium compounds (b) because reactivity can be controlled to inhibit gelation. Particularly preferably, the condensates have condensation degrees ranging from dimers to decamers. The condensates may be those that are given by previously hydrolyzing and condensing one titanium compound or a mixture of two or more titanium compounds selected from the titanium alcoholates, titanium alcoholate chelates, titanium acylates and titanium acylate chelates. Commercially available condensates are also employable. The titanium alcoholate condensates and the titanium acylate condensates may be used as they are, or after partial or complete hydrolysis of the OR² groups in the condensates. Furthermore, it is also possible that they are reacted with the chelating agents to give condensates of the titanium alcoholate chelates and the titanium acylate chelates prior to use.

Examples of the commercially available titanium alcoholate condensates (ranging from dimers to decamers) include A-10, B-2, B-4, B-7 and B-10 available from NIPPON SODA CO., LTD.

The titanium compounds (b) may be used singly or in combination of two or more kinds.

Desirably, the titanium compound (b) will be contained in an amount of 1 to 50 parts by weight, preferably 2 to 40 parts by weight, and more preferably 5 to 30 parts by weight in terms of completely hydrolyzed condensate, per 100 parts by weight of the fine particles (a) in terms of solid. As used herein, the completely hydrolyzed condensate means the titanium compound of the formula (1) in which the OR² groups are 100% hydrolyzed to form Ti-OH groups and then the Ti-OH groups are all condensed into Ti-O-Ti structures.

The titanium compounds (b) probably have functions to reduce diameters of the dispersed fine particles (a) and to better disperse the fine particles (a) by adsorbing and combining to the surface of the fine particles (a).

### (c) Silane compound:

The silane compound (c) used in the invention is at least one silane compound selected from the group consisting of organosilanes represented by the following formula (2) (hereinafter, the organosilanes (2)) and derivatives thereof:

R³ ₙSi(OR⁴)₄₋ₙ (2)

wherein R³ is a monovalent organic group of 1 to 8 carbon atoms and may be the same or different from each other when plural; R⁴ is an alkyl group of 1 to 5 carbon atoms or an acyl group of 1 to 6 carbon atoms, and may be the same or different from each other when plural; R³ and R⁴ may be the same or different from each other; and n is an integer ranging from 0 to 3.

The derivatives of the organosilanes (2) include hydrolysates and condensates of the organosilanes (2).

The silane compound (c) used in the invention is at least one silane compound selected from the group consisting of the organosilanes (2), the hydrolysates of the organosilanes (2) and the condensates of the organosilanes (2). Of these three types of the silane compounds, only one silane compound may be used, or arbitrary two types or all the three types of the silane compounds may be used in combination.

In the formula (2), R³ refers to a monovalent organic group of 1 to 8 carbon atoms. Specific examples thereof include:
alkyl groups such as methyl, ethyl, n-propyl, i-propyl, n-butyl, i-butyl, sec-butyl, t-butyl, n-hexyl, n-heptyl, n-octyl and 2-ethylhexyl groups;
acyl groups such as acetyl, propionyl, butyryl, valeryl, benzoyl, toluoyl and caproyl groups; and
vinyl, allyl, cyclohexyl, phenyl, epoxy, glycidyl, (meth)acryloxy, ureido, amido, fluoroacetamido and isocyanato groups.

Examples of R³ further include substitution derivatives of the above organic groups. The substituents of the substitution derivatives indicated by R³ include halogen atoms, substituted or unsubstituted amino group, hydroxyl group, mercapto group, isocyanato group, glycidoxy group, 3, 4-epoxycyclohexyl group, (meth) acryloxy group, ureido group and ammonium bases. Preferably, the substitution derivatives as R³ have up to 8 carbon atoms including those of the substituents.

When plural, R³ in the formula (2) may be the same or different from each other.

The alkyl groups of 1 to 5 carbon atoms indicated by R⁴ include methyl, ethyl, n-propyl, i-propyl, n-butyl, sec-butyl, t-butyl and n-pentyl groups. The acyl groups of 1 to 6 carbon atoms include acetyl, propionyl, butyryl, valeryl and caproyl groups.

When plural, R⁴ in the formula (2) may be the same or different from each other.

Specific examples of the organosilanes (2) include:
tetraalkoxysilanes such as tetramethoxysilane, tetraethoxysilane, tetra-n-propoxysilane, tetra-i-propoxysilane and tetra-n-butoxysilane;
trialkoxysilanes such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, n-butyltrimethoxysilane, n-butyltriethoxysilane, n-pentyltrimethoxysilane, n-hexyltrimethoxysilane, n-heptyltrimethoxysilane, n-octyltrimethoxysilane, vinyltrimethoxysilane, vinyltriethoxysilane, cyclohexyltrimethoxysilane, cyclohexyltriethoxysilane, phenyltrimethoxysilane, phenyltriethoxysilane, 3-chloropropyltrimethoxysilane, 3-chloropropyltriethoxysilane, 3,3,3-trifluoropropyltrimethoxysilane, 3,3,3-trifluoropropyltriethoxysilane, 3-aminopropyltrimethoxysilane, 3-aminopropyltriethoxysilane, 2-hydroxyethyltrimethoxysilane, 2-hydroxyethyltriethoxysilane, 2-hydroxypropyltrimethoxysilane, 2-hydroxypropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-isocyanatopropyltrimethoxysilane, 3-isocyanatopropyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-(meth)acryloxypropyltrimethoxysilane, 3-(meth)acryloxypropyltriethoxysilane, 3-ureidopropyltrimethoxysilane and 3-ureidopropyltriethoxysilane;
dialkoxysilanes such as dimethyldimethoxysilane, dimethyldiethoxysilane, diethyldimethoxysilane, diethyldiethoxysilane, di-n-propyldimethoxysilane, di-n-propyldiethoxysilane, di-i-propyldimethoxysilane, di-i-propyldiethoxysilane, di-n-butyldimethoxysilane, di-n-butyldiethoxysilane, di-n-pentyldimethoxysilane, di-n-pentyldiethoxysilane, di-n-hexyldimethoxysilane, di-n-hexyldiethoxysilane, di-n-heptyldimethoxysilane, di-n-heptyldiethoxysilane, di-n-octyldimethoxysilane, di-n-octyldiethoxysilane, di-n-cyclohexyldimethoxysilane, di-n-cyclohexyldiethoxysilane, diphenyldimethoxysilane and diphenyldiethoxysilane;
monoalkoxysilanes such as trimethylmethoxysilane, trimethylethoxysilane, triethylmethoxysilane and triethylethoxysilane; and
methyltriacetyloxysilane and dimethyldiacetyloxysilane.

Of these, the trialkoxysilanes and the dialkoxysilanes are preferable. More preferred trialkoxysilanes are methyltrimethoxysilane and methyltriethoxysilane, and more preferred dialkoxysilanes are dimethyldimethoxysilane and dimethyldiethoxysilane.

The organosilanes (2) may be used singly or in combination of two or more kinds. Use of the trialkoxysilane alone or a mixture of 40-95 mol% the trialkoxysilane and 60-5 mol% the dialkoxysilane is particularly preferable. The combined use of the dialkoxysilane and the trialkoxysilane leads to the coating film having flexibility and improved alkali resistance.

The silane compounds (c) used in the present invention may be the organosilanes (2) as they are, or the hydrolysates and/or condensates thereof.

In the hydrolysates of the organosilanes (2), at least one OR⁴ group of the two to four OR⁴ groups in the organosilane (2) has been hydrolyzed. That is, these hydrolysates have one hydrolyzed OR⁴ group, or two or more hydrolyzed OR⁴ groups. Mixtures of such hydrolysates are also employable.

The condensates of the organosilanes (2) occur when in the hydrolysates of the organosilanes (2), the silanol groups are condensed into Si-O-Si linkages. In the present invention, it is not necessary that all the silanol groups be condensed. The condensates include those in which a few of the silanol groups are condensed, those in which most of (or all) the silanol groups are condensed, and mixtures of such condensates.

The hydrolysates and/or condensates of the organosilanes (2) can be produced previously by hydrolysis and condensation of the organosilanes (2). It is also possible, as described later, that the organosilane (2) is hydrolyzed with water and condensed during preparation of the coating composition, thereby to produce the hydrolysate and/or the condensate of the organosilane (2). The hydrolysis may be performed by separately adding water or by using the water contained in the fine particles (a), or the water or organic solvent (e) described later. The water is generally used in an amount of 0.5 to 3 mol, and desirably 0.7 to 2 mol per mol of the organosilane (2).

The condensates of the organosilanes (2) preferably have a weight-average molecular weight in terms of polystyrene (hereinafter, Mw) from 300 to 100, 000, more preferably from 400 to 70,000, and particularly preferably from 500 to 50,000.

As the silane compound (c), the silane compounds prepared as described above, commercially available silane compounds are also employable. Exemplary commercial silane compounds include MKC silicate available from Mitsubishi Chemical Corp., ethyl silicate available from Colcoat Co., Ltd., silicone resins available from Dow Corning Toray Silicone Co., Ltd., silicone resins available from GE Toshiba Silicones, silicone resins available from Shin-Etsu Chemical Co., Ltd., hydroxyl group-containing polydimethylsiloxanes available from Dow Corning Asia Ltd., and silicone oligomers manufactured by Nippon Unicar Co., Ltd. These commercial silane compounds may be used directly or after condensed.

The silane compounds (c) may be used singly or in combination of two or more kinds.

Desirably, the silane compound (c) will be contained in an amount of 2 wt% or above, preferably 5 wt% or above, and more preferably 10 wt% or above in terms of completely hydrolyzed condensate, based on all the solid components other than the fine particles (a) in the coating composition. As used herein, the completely hydrolyzed condensate means the silane compound of the formula (2) in which the OR⁴ groups are 100% hydrolyzed into Si-OH groups and then the Si-OH groups are all condensed to form siloxane structures. When the amount of the silane compound (c) is below the lower limit, the resultant coating film often becomes brittle and suffers chalking.

### (d) Organosiloxane oligomer:

The organosiloxane oligomer (d) used in the invention has an Si-O linkage and a weight-average molecular weight of 300 to 100,000. It has a structure represented by the following formula (3) at its side chain and/or terminal:

-(R⁵O)ₚ-(R⁶O)_{q}-R⁷ (3)

wherein R⁵ and R⁶ are independently an alkyl group of 1 to 5 carbon atoms; R⁷ is hydrogen or an alkyl group of 1 to 5 carbon atoms; and p and q are numbers of which the total (p + q) should be 2 to 50.

The functional groups represented by the above formula (3) include polyoxyalkylene groups such as polyoxyethylene, polyoxypropylene and poly(oxyethylene/oxypropylene). When the organosiloxane oligomer (d) contains the above functional group, the polyoxyalkylene group is liable to adsorb to the fine particles (a) to offer improved dispersion stability of the fine particles (a).

The main chain of the organosiloxane oligomer (d) may be substituted with a functional group that contains the hydroxyl group, a halogen atom or an organic group of 1 to 15 carbon atoms.

The halogen atoms include fluorine and chlorine.

The organic groups of 1 to 15 carbon atoms include alkyl, acyl, alkoxyl, alkoxysilyl, vinyl, allyl, acetoxyl, acetoxysilyl, cycloalkyl, phenyl, glycidyl, (meth)acryloxy, ureido, amido, fluoroacetamido and isocyanato groups.

The alkyl groups of 1 to 15 carbon atoms include methyl, ethyl, n-propyl, i-propyl, n-butyl, i-butyl, sec-butyl, t-butyl, n-hexyl, n-heptyl, n-octyl, n-nonyl, n-decyl, undecyl, dodecyl, tridecyl, tetradecyl, hexadecyl, heptadecyl, octadecyl and 2-ethylhexyl groups.

The acyl groups of 1 to 15 carbon atoms include acetyl, propionyl, butyryl, valeryl, benzoyl and toluoyl groups.

The alkoxyl groups of 1 to 15 carbon atoms include methoxy, ethoxy, propoxy and butoxy groups.

The alkoxysilyl groups of 1 to 15 carbon atoms include methoxysilyl, ethoxysilyl, propoxysilyl and butoxysilyl groups.

These groups may be partially hydrolyzed and condensed. Substitution derivatives of the above groups are also employable. The substituents of the substitution derivatives include halogen atoms, substituted or unsubstituted amino group, hydroxyl group, mercapto group, isocyanato group, glycidoxy group, 3,4-epoxycyclohexyl group, (meth)acryloxy group, ureido group, ammonium bases and ketoester group.

Of these, the organosiloxane oligomer (d) preferably used has a structure in which the silicon atom of the silyl group is combined with a hydrolyzable group and/or a hydroxyl group. For example, chlorosilane condensates or alkoxysilane condensates are preferable. When the coating composition of the invention is cured, the organosiloxane oligomer (d) is co-condensed with the titanium compound (b) and the silane compound (c) and is immobilized to afford a stable coating film. The organosiloxane oligomer (d) containing the glycidyl group provides higher adhesion to a substrate or an undercoat. In particular, the coating film has toughness and improved adhesion to a substrate when the organosiloxane oligomer (d) having a structure in which the silicon atom of the silyl group is combined with a hydrolyzable group and/or a hydroxyl group, and containing the glycidyl group, in the molecule, is used.

The organosiloxane oligomers (d) have a weight-average molecular weight in terms of polystyrene (hereinafter, Mw) from 300 to 100, 000, preferably from 600 to 50, 000, and particularly preferably from 1,000 to 20,000. When the weight-average molecular weight is below the lower limit, the resultant coating film will have insufficient flexibility. When it exceeds the upper limit, the storage stability of the coating composition is deteriorated.

The organosiloxane oligomers (d) may be used singly or in combination of two or more kinds. Exemplary combinations of two or more organosiloxane oligomers (d) are mixtures of an organosiloxane oligomer having Mw of 400 to 2,800 and an organosiloxane oligomer having Mw of 3,000 to 50,000, and mixtures of two organosiloxane oligomers having different functional groups.

In the invention, commercially available organosiloxane oligomers are employable as the organosiloxane oligomers (d). Examples thereof include modified silicone oils available from Dow Corning Toray Silicone Co., Ltd., modified silicone oils available from GE Toshiba Silicones, modified silicone oils available from Shin-Etsu Chemical Co., Ltd., and modified silicone oils available from Nippon Unicar Co., Ltd. These organosiloxane oligomers may be used as they are or as condensates.

Desirably, the organosiloxane oligomer (d) is contained in an amount of 1 to 200 parts by weight, preferably 5 to 100 parts by weight, and more preferably 10 to 60 parts by weight per 100 parts by weight of the fine particles (a) in terms of solid. When the amount of the organosiloxane oligomer (d) is below the lower limit, dispersion stability will be poor. When it exceeds the upper limit, the resultant coating film will become brittle and suffer chalking.

### (e) Water and/or organic solvent:

The coating compositions of the invention contain water and/or an inorganic solvent (e). Herein, known organic solvents can be used, and examples thereof are alcohols, aromatic hydrocarbons, ethers, ketones and esters.

The alcohols include methanol, ethanol, n-propyl alcohol, i-propyl alcohol, n-butyl alcohol, sec-butyl alcohol, t-butyl alcohol, n-hexyl alcohol, n-octyl alcohol, ethylene glycol, diethylene glycol, triethylene glycol, ethylene glycol monobutyl ether, ethylene glycol monoethyl ether acetate, diethylene glycol monoethyl ether, propylene glycol monomethyl ether, propylene monomethyl ether acetate and diacetone alcohol.

The aromatic hydrocarbons include benzene, toluene and xylene.

The ethers include tetrahydrofuran and dioxane.

The ketones include acetone, methyl ethyl ketone, methyl isobutyl ketone and diisobutyl ketone.

The esters include ethyl acetate, propyl acetate, butyl acetate, propylene carbonate, methyl lactate, ethyl lactate, normal propyl lactate, isopropyl lactate, methyl 3-ethoxypropionate and ethyl 3-ethoxypropionate.

These organic solvents may be used singly or in combination of two or more kinds.

### (f) Catalyst:

The coating compositions of the invention preferably contain a catalyst (f). Employable catalysts (f) include acidic compounds, alkaline compounds, salt compounds, amine compounds, and organometallic compounds and/or partial hydrolysates thereof (hereinafter, the organometallic compounds and/or partial hydrolysates thereof will be collectively referred to as the organometallic compounds).

The acidic compounds include acetic acid, hydrochloric acid, sulfuric acid, phosphoric acid, alkyltitanic acid, p-toluenesulfonic acid and phthalic acid. Of these, the acetic acid is preferable.

The alkaline compounds include sodium hydroxide and potassium hydroxide. Of these, the sodium hydroxide is preferable.

The salt compounds include alkali metal salts of naphthenic acid, octylic acid, nitrous acid, sulfurous acid, aluminic acid and carbonic acid.

The amine compounds include ethylenediamine, hexamethylenediamine, diethylenetriamine, triethylenetetramine, tetraethylenepentamine, piperidine, piperadine, m-phenylenediamine, p-phenylenediamine, ethanolamine, triethylamine, 3-aminopropyl trimethoxysilane, 3-aminopropyl triethoxysilane, 3-(2-aminoethyl)-aminopropyl trimethoxysilane, 3-(2-aminoethyl)-aminopropyl triethoxysilane, 3-(2-aminoethyl)-aminopropyl methyl dimethoxysilane, 3-anilinopropyl trimethoxysilane, alkylamine salts, quaternary ammonium salts, and modified amines used as curing agents for epoxy resins. Of these, 3-aminopropyl trimethoxysilane, 3-aminopropyl triethoxysilane and 3-(2-aminoethyl)-aminopropyl trimethoxysilane are preferred.

The organometallic compounds include:
compounds represented by the following formula (4) (hereinafter, the organometallic compounds (4)):

   M(OR⁸)ᵣ(R⁹COCHCOR¹⁰)ₛ (4)
wherein M denotes to at least one metal atom selected from zirconium, titanium and aluminum; R⁸ and R⁹ are independently a monovalent hydrocarbon group of 1 to 6 carbon atoms such as ethyl, n-propyl, i-propyl, n-butyl, sec-butyl, t-butyl, n-pentyl, n-hexyl, cyclohexyl or phenyl group; R¹⁰ is the monovalent hydrocarbon group of 1 to 6 carbon atoms, or an alkoxyl group of 1 to 16 carbon atoms such as methoxy, ethoxy, n-propoxy, i-propoxy, n-butoxy, sec-butoxy, t-butoxy, lauryloxy or stearyloxy group; and r and s are independently an integer of 0 to 4, and (r + s) = (valency of M);
tetravalent organotin compounds in which 1 to 2 alkyl groups having 1 to 10 carbon atoms are attached to one tin atom (hereinafter, the organotin compounds); and
partial hydrolysates of these compounds.

The above-described titanium compounds (b) are also usable as the organometallic compounds.

Examples of the organometallic compounds (4) include:
organozirconium compounds such as tetra-n-butoxy zirconium, tri-n-butoxy ethylacetoacetate zirconium, di-n-butoxy bis(ethylacetoacetate) zirconium, n-butoxy tris(ethylacetoacetate) zirconium, tetrakis(n-propylacetoacetate) zirconium, tetrakis(acetylacetoacetate) zirconium and tetrakis(ethylacetoacetate) zirconium;
organotitanium compounds such as tetra-i-propoxy titanium, di-i-propoxy bis(ethylacetoacetate) titanium, di-i-propoxy bis(acetylacetate) titanium and di-i-propoxy bis(acetylacetone) titanium; and
organoaluminum compounds such as tri-i-propoxy aluminum, di-i-propoxy ethylacetoacetate aluminum, di-i-propoxy acetylacetonate aluminum, i-propoxy bis(ethylacetoacetate) aluminum, i-propoxy bis(acetylacetonate) aluminum, tris(ethylacetoacetate) aluminum, tris(acetylacetonate) aluminum and monoacetylacetonate bis(ethylacetoacetate) aluminum.

Of the organometallic compounds (4) and partial hydrolysates thereof, tri-n-butoxy ethylacetoacetate zirconium, di-i-propoxy bis(acetylacetonate) titanium, di-i-propoxy ethylacetoacetate aluminum, tris(ethylacetoacetate) aluminum and partial hydrolysates thereof are preferably employed.

Examples of the organotin compounds include:
carboxylic acid-based organotin compounds such as (C₄H₉)₂Sn(OCOC₁₁H₂₃)₂, (C₄H₉)₂Sn(OCOCH=CHCOOCH₃)₂, (C₄H₉)₂Sn(OCOCH=CHCOOC₄H₉)₂, (C₈H₁₇)₂Sn(OCOC₈H₁₇)₂, (C₈H₁₇)₂Sn(OCOC₁₁H₂₃)₂, (C₈H₁₇)₂Sn(OCOCH=CHCOOCH₃)₂, (C₈H₁₇)₂Sn(OCOCH=CHCOOC₄H₉)₂, (C₈H₁₇)₂Sn(OCOCH=CHCOOC₈H₁₇)₂, (C₈H₁₇)₂Sn(OCOCH=CHCOOC₁₆H₃₃)₂, (C₈H₁₇)₂Sn(OCOCH=CHCOOC₁₇H₃₅)₂, (C₈H₁₇)₂Sn(OCOCH=CHCOOC₁₈H₃₇)₂, (C₈H₁₇)₂Sn(OCOCH=CHCOOC₂₀H₄₁)₂, 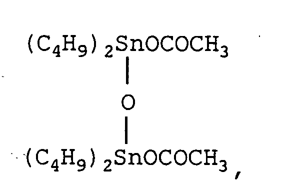 (C₄H₉)Sn (OCOC₁₁H₂₃)₃ and (C₄H₉)Sn (OCONa)₃;
mercaptide-based organotin compounds such as (C₄H₉)₂Sn(SCH₂COOC₈H₁₇)₂, (C₄H₉)₂Sn(SCH₂CH₂COOC₈H₁₇)₂, (C₈H₁₇)₂Sn(SCH₂COOC₈H₁₇)₂, (C₈H₁₇)₂Sn(SCH₂CH₂COOC₈H₁₇)₂, (C₈H₁₇)₂Sn(SCH₂COOC₁₂H₂₅)₂, (C₈H₁₇)₂Sn(SCH₂CH₂COOC₁₂H₂₅)₂, (C₄H₉)Sn(SCOCH=CHCOOC₈H₁₇)₃, (C₈H₁₇)Sn(SCOCH=CHCOOC₈H₁₇)₃ and 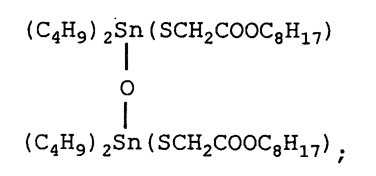
sulfide-based organotin compounds such as (C₄H₉)₂Sn=S, (C₈H₁₇)₂Sn=S and 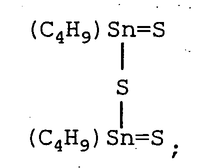
chloride-based organotin compounds such as (C₄H₉)SnCl₃, (C₄H₉)₂SnCl₂, (C₈H₁₇)₂SnCl₂ and 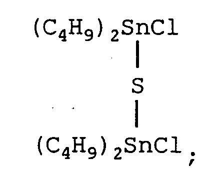
organotin oxides such as (C₄H₉)₂SnO and (C₈H₁₇)₂SnO; and
reaction products formed between the organotin oxides and ester compounds such as silicate, dimethyl maleate, diethyl maleate and dioctyl phthalate.

The catalysts (f) may be used singly or in combination of two or more kinds. The catalysts can be used as mixture with zinc compounds or retarders.

The catalyst (f) may be mixed in the step of preparing the coating composition. Otherwise, the catalyst (f) may be blended to the coating composition in the step of forming the coating film. It is also possible that the catalyst is added in both the preparation of the coating composition and the formation of the coating film.

The amount of the catalyst (f) is desirably not more than 10 mol, preferably in the range of 0.001 to 7 mol, and more preferably in the range of 0.001 to 5 mol per mol of the OR⁴ groups in the silane compound (c). When the amount of the catalyst (f) exceeds the upper limit, the storage stability of the coating composition is often deteriorated and the coating film often suffers cracks.

The catalyst (f) accelerates the hydrolysis and condensation of the silane compound (c), the organosiloxane oligomer (d), etc. Therefore, the use of the catalyst (f) leads to an increased molecular weight of the polysiloxane resin resulting from polycondensation of the silane compound (c) and the organosiloxane oligomer (d). As a result, the coating rate of a coating film can be enhanced and the coating film excellent in strength and durability can be formed. Furthermore, the use of the catalyst (f) permits increasing the thickness of the coating film and easy application work.

### (g) Stability improver:

When necessary, the coating compositions may contain a stability improver (g). The stability improver (g) used in the invention is at least one compound selected from the group consisting of β-diketones, β-ketoesters, carboxylic acid compounds, dihydroxy compounds, amine compounds and oxyaldehyde compounds. They are represented by the following formula (5):

R¹¹COCH₂COR¹² (5)

wherein R¹¹ is a monovalent hydrocarbon group of 1 to 6 carbon atoms such as ethyl, n-propyl, i-propyl, n-butyl, sec-butyl, t-butyl, n-pentyl, n-hexyl, cyclohexyl or phenyl group; R¹² denotes to the monovalent hydrocarbon group of 1 to 6 carbon atoms, or an alkoxyl group of 1 to 16 carbon atoms such as methoxy, ethoxy, n-propoxy, i-propoxy, n-butoxy, sec-butoxy, t-butoxy, lauryloxy or stearyloxy group.

Exemplary stability improvers (g) include acetylacetone, methyl acetoacetate, ethyl acetoacetate, n-propyl acetoacetate, i-propyl acetoacetate, n-butyl acetoacetate, sec-butyl acetoacetate, t-butyl acetoacetate, hexane-2,4-dione, heptane-2,4-dione, heptane-3,5-dione, octane-2,4-dione, nonane-2,4-dione, 5-methylhexane-2,4-dione, malonic acid, oxalic acid, phthalic acid, glycolic acid, salicylic acid, aminoacetic acid, iminoacetic acid, ethylenediaminetetraacetic acid, glycol, catechol, ethylenediamine, 2,2-bipyridine, 1,10-phenanthroline, diethylenetriamine, 2-ethanolamine, dimethylglyoxime, dithizone, methionine and salicylaldehyde. Of these, acetylacetone and ethyl acetoacetate are preferred.

The stability improver (g) is particularly suitably used when the titanium compound (b), or the organometallic compound as the catalyst (f) is used. The stability improvers (g) may be used singly or in combination of two or more kinds.

The use of the stability improver (g) probably causes the coordination of the stability improver (g) to the metal atoms of the organometallic compound, and the coordination will adequately control the acceleration action of the organometallic compound in co-condensation of the silane compound (c) and the organosiloxane oligomer (d), to thereby improve storage stability of the coating composition

The amount of the stability improver (g) is desirably not less than 2 mol, and preferably in the range of 3 to 20 mol per mol of the organometallic compound selected from the aforesaid organometallic compounds. When the amount of the stability improver (g) is below the lower limit, the storage stability of the coating composition having a high solid concentration may not be improved sufficiently.

### (h) Filler:

When necessary, a filler can be added to and dispersed in the coating compositions of the present invention for the purpose of coloring and increased thickness of the coating film.

The fillers employable in the invention include water-insoluble organic pigments and inorganic pigments; particulate, fibrous or squamate ceramics, metals and alloys other than pigments; and oxides, hydroxides, carbides, nitrides and sulfides of these metals.

Specific examples include iron, copper, aluminum, nickel, silver, zinc, ferrite, carbon black, stainless steel, silica, titania pigment, alumina, chrome oxide, manganese oxide, iron oxide, zirconia, cobalt oxide, synthetic mullite, aluminum hydroxide, iron hydroxide, silicon carbide, silicon nitride, boron nitride, clay, diatom earth, slaked lime, plaster, talc, barium carbonate, calcium carbonate, magnesium carbonate, barium sulfate, bentonite, mica, zinc green, chrome green, cobalt green, viridian, Guignet's green, cobalt chrome green, shale green, green earth, manganese green, pigment green, ultramarine, iron blue pigment, pigment green, mountain blue, cobalt blue, cerulean blue, copper borate, molybdenum blue, copper sulfide, cobalt violet, mars violet, manganese violet, pigment violet, lead suboxide, calcium plumbate, zinc yellow, lead sulfide, chrome yellow, loess, cadmium yellow, strontium yellow, titanium yellow, litharge, pigment yellow, cuprous oxide, cadmium red, selenium red, chrome vermilion, red oxide, zinc white, antimony white, basic lead sulfate, titanium white, lithopone, lead silicate, zirconium oxide, tungsten white, lead, zinc white, Pattinson white, lead phthalate, manganese white, lead sulfate, graphite, bone black, diamond black, thermatomic black, plant black, potassium titanate whisker and molybdenum disulfide.

The fillers may be used singly or in combination of two or more kinds. The amount of the filler is preferably not more than 300 parts by weight per 100 parts by weight of all the solid components in the coating composition.

### (i) Other additives:

When necessary, the coating compositions may contain additives. Exemplary additives are:
known dehydrating agents such as methyl orthoformate, methyl orthoacetate and tetraethoxysilane;
dispersants such as polyoxyethylenealkylether, polyoxyethylenealkylphenylether, polyoxyethylene fatty acid esters, polycarboxylic acid-based polymer surfactants, polycarboxylates, polyphosphates, polyacrylates, polyamide ester salts and polyethylene glycol;
celluloses such as methyl cellulose, ethyl cellulose, hydroxyethyl cellulose, hydroxypropyl cellulose and hydroxypropylmethyl cellulose;
thickeners such as castor oil derivatives and ferrosilicates;
inorganic foaming agents such as ammonium carbonate, ammonium hydrogencarbonate, ammonium nitrite, sodium boron hydride and calcium azide;
organic foaming agents, including azo compounds such as azobisisobutyronitrile, hydrazine compounds such as diphenylsulfone-3,3'-disulfohydrazine, semicarbazide compounds, triazole compounds and N-nitroso compounds; and
surfactants and dyes.

Further, a leveling agent may be added for improving coating properties (or film-formation properties) of the compositions of the invention. The leveling agents include:
fluorine leveling agents such as BM1000 and BM1100 (trade names, the same applies hereinafter) available from BM-Chemie GmbH, Efka 772 andEfka 777 available from Efka Chemicals B.V., the FLOWLEN series available from Kyoeisha Chemical Co., Ltd., the FC series available from Sumitomo 3M Limited, and the Fluonal (transliteration) TF series available from TOHO Chemical Industry Co., Ltd.;
silicone leveling agents such as the BYK series available from BYK Chemie GmbH, the Sshmego series available from Sshmegmann, and Efka 30, Efka 31, Efka 34, Efka 35, Efka 36, Efka 39, Efka 83, Efka 86 and Efka 88 available from Efka Chemicals B.V.; and
ether or ester leveling agents such as SURFYNOL available from Nisshin Chemical Industry Co., Ltd., and EMULGEN and HOMOGENOL available from Kao Corporation.

The leveling agents improve appearance of finished coating films and permit preparing the thin films with uniformity.

In the invention, the leveling agent is preferably used in an amount of 0.01 to 5 wt%, and more preferably 0.02 to 3 wt% based on the whole composition.

The leveling agent may be mixed in the step of preparation of the coating composition. Otherwise, the leveling agent may be blended to the coating composition in the step of forming the coating film. It is also possible that the leveling agent is added in both the preparation of the coating composition and the formation of the coating film.

### <Coating compositions>

The coating compositions according to the present invention contain the fine particles (a), the titanium compound (b) and/or the organosiloxane oligomer (d), and the silane compound (c). To produce the coating compositions, the silane compound (c) can be hydrolyzed and condensed in the presence of at least the fine particles (a), and the titanium compound (b) and/or the organosiloxane oligomer (d). Exemplary processes are given below:
(1) When the fine particles (a) are in the form of sol:
   To the fine particles (a), the titanium compound (b) and/or the organosiloxane oligomer (d) are added, followed by stirring. To the resultant mixture, the silane compound (c) and, optionally, the water and/or the organic solvent (e), and/or the catalyst (f) are added to perform hydrolysis and condensation.
(2) When the fine particles (a) are powders:
   To the fine particles (a), the water and/or the organic solvent (e), and the titanium compound (b) and/or the organosiloxane oligomer (d) are added, followed by dispersing the particles with use of a dispersing device or the like. Thereafter, to the thus-formed dispersion, the silane compound (c) and, according to need, the water and/or the organic solvent (e), and/or the catalyst (f) are added to perform hydrolysis and condensation.

In the above processes (1) and (2), each of the components (b) to (f) may be added at once or consecutively. In particular, consecutive addition is preferable for the components having low compatibility with the fine particles (a). Herein, the term "at-once addition" means that one component is added all at once, whilst the term "consecutive addition" means one component is added over an arbitrary time. When each of the components (b) to (d) is added at once, all of them may be added collectively at once, while they may be added separately in consideration of the compatibility with the fine particles.

The dispersing devices for use in the process (2) include ultrasonic dispersers, ball mills, sand mills (beads mills), homogenizers, ultrasonic homogenizers, nanomizers, propeller mixers and high-shear mixers.

When the titanium compound (b) and/or the organosiloxane oligomer (d) are added to the fine particles (a), the titanium compound (b) and/or the organosiloxane oligomer (d) adsorb to and/or react with the fine particles (a), and thereby good dispersion stability of the fine particles (a) is obtained. In particular, the titanium compound (b) and the organosiloxane oligomer (d) are preferably used in combination for the case where the fine particles (a) are less prone to be dispersed due to strong cohesive force.

In the process (2), when the fine particles (a) are dispersed in the presence of the titanium compound (b) using the dispersing device, the secondary particle diameters of the fine particles (a) are reduced. Furthermore, the fine particles (a) adsorb to the structure represented by the formula (3) of the organosiloxane oligomer (d) and thereby the particles are immobilized within the organosiloxane oligomer (d), providing storage stability.

The silane compound (c) added plays a role as a binder, and a coating film free from chalking can be produced even if the fine particles (a) are present in high content.

The total solid concentration in the coating compositions is desirably in the range of 1 to 50 wt%, and preferably 3 to 40 wt%. The total solid concentration exceeding the upper limit may cause deterioration in storage stability.

The coating compositions may be prepared appropriately depending on the intended application. For example, they may be used as materials for forming coating films on substrates or as recoating materials for deteriorated coating films.

### <Coating film>

The coating film according to the present invention may be formed by spreading any of the aforesaid coating compositions on a substrate.

### (Substrate)

Suitable substrates include:
metals such as iron, aluminum and stainless steel;
inorganic ceramic materials such as cement, concrete, autoclaved lightweight concrete (ALC), flexible boards, mortar, slate, plaster, ceramics and bricks;
molded articles of plastics such as phenolic resins, epoxy resins, acrylic resins, polyesters, polycarbonates, polyethylenes, polypropylenes, ABS resins (acrylonitrile-butadiene-styrene resins) and thermoplastic norbornene resins;
films of plastics such as polyethylenes, polypropylenes, polyvinyl alcohols, polycarbonates, polyethylene terephthalates, polyurethanes, polyimides, polyacryl, polyvinyl chloride and thermoplastic norbornene resins;
inorganic materials such as silicon wafers, quartz glass and glass; wood and paper.

The substrates may previously be surface treated for base conditioning, improved adhesion, filling of porous substrates, smoothing, and patterning.

The surface treatments for the metal substrates include polishing, degreasing, plating, chromate treatment, flame treatment and coupling treatment.

The surface treatments for the plastic substrates include blasting, chemical treatment, degreasing, flame treating, oxidation treatment, vapor treatment, corona discharge treatment, ultraviolet irradiation treatment, plasma treatment and ion treatment.

The surface treatments for the inorganic ceramic substrates include polishing, filling and patterning.

The surface treatments for the wood substrates include polishing, filling and mothproofing.

The surface treatments for the paper substrates include filling and mothproofing.

The surface treatments for the deteriorated coating films include mechanical or chemical treatments.

Primers may be used to ensure adhesion to the substrate. (Production of coating film)

The coating film according to the invention may be prepared by spreading the coating composition on the substrate, followed by drying.

The spreading of the coating composition on the substrate can be performed by application using a brush, a roll coater, a bar coater, a flow coater, a centrifugal coater, an ultrasonic coater or a (micro) gravure coater. Moreover, dip coating, curtain coating, spraying, screen processing, electrodeposition or vapor deposition is employable.

After the coating composition is applied on the substrate, the coating is dried at ordinary temperature or dried by heating at a temperature of about 30 to 200°C, generally for 1 to 60 minutes, thereby giving a stable coating film.

When the coating composition is applied one time, the dry thickness will be about 0.05 to 20 µm. The coating film formed by double coating will have a dry thickness of about 0.1 to 40 µm.

### EXAMPLES

Hereinbelow, the present invention will be described by Examples. However, it should be construed that the invention is not limited thereto. In Examples and Comparative Examples, part(s) and % are by weight unless otherwise mentioned. The coating compositions were tested by the following methods.

### (1) Storage stability:

The coating compositions were stored in a sealed polyethylene bottle for a month at room temperature, and were visually observed to judge whether any gelation had occurred. Thereafter, the viscosity was measured for the compositions free from gelation using a BM viscometer manufactured by Tokyo Keiki Co., Ltd. The storage stability of the coating compositions was evaluated by the following criteria:
AA: Up to 20% viscosity change after the sealed storage against before
BB: Above 20% viscosity change after the sealed storage against before
CC: Gelation after the sealed storage

### (2) Transparency:

The coating compositions were diluted with i-propyl alcohol to a solid concentration of 5%, and were applied to quarts glass with use of ROD. No. 3 bar coater (manufactured by Japan Cedars Service) so as to achieve a dry thickness of 0.2 µm, followed by drying at 150°C for 1 hour. The total light transmittance of the resultant coating films was measured using a haze meter (Haze-gard plus illuminant CIE-C) manufactured by Gardner. The transparency of the coating films was evaluated by the following criteria:
AA: The total light transmittance is above 80%.
BB: The total light transmittance is in the range of 60-80%
CC: The total light transmittance is less than 60%

### (3) Adhesion:

The coating films prepared in the transparency test were subj ected to a tape peeling test in accordance with the crosscut adhesion test (100 crosscuts) specified in JIS K5400. The test was conducted three times, and the adhesion was evaluated based on the average of the crosscuts that had remained unpeeled.

### (4) Photocatalysis for rendering superhydrophilic:

The coating films prepared in the transparency test were irradiated with light from a 1.0 mW/cm² black-light fluorescent lump for 72 hours, and the water contact angle was measured.

### <Example 1>

A vessel was charged with:
60 parts of anatase-type titanium oxide as the fine particles (a);
32 parts of tetra-n-butoxytitanium decamer (trade name: B-10, available from NIPPON SODA CO., LTD.) as the titanium compound (b);
200 parts of methyltrimethoxysilane and 41 parts of γ-methacryloxypropyltrimethoxysilane as the silane compounds (c); and
44 parts of isopropyl alcohol as the organic solvent (e).

Further, 300 parts of 0.3-mm zirconia beads were added, and stirring was performed at 1500 rpm for 1 hour using a beads mill to prepare a dispersion. Thereafter, 577 parts of i-propyl alcohol as the organic solvent (e) was added, and the beads were removed. Subsequently, 10 parts of di-i-propoxy ethylacetoacetate aluminum as the catalyst (f) and 50 parts of water (e) were added, followed by stirring with heating at 60°C for 4 hours. Thus, a coating composition A having about 20% solid concentration was obtained. The composition A provided the storage stability of AA, coating film transparency of AA, unpeeled crosscut average of 100, and water contact angle of 4 degrees.

### <Example 2>

A vessel was charged with:
300 parts of rutile-type titanium oxide as the fine particles (a), dispersed in isopropyl alcohol at about 20% solid concentration;
29 parts of dimethylsiloxane oligomer that contained alkoxysilyl and poly(oxyethylene/oxypropylene) groups (MAC2101, available from Nippon Unicar Company Limited), as the organosiloxane oligomer (d);
200 parts of methyltrimethoxysilane and 19 parts of γ-glycidoxypropyltrimethoxysilane as the silane compounds (c); and
413 parts of isopropyl alcohol as the organic solvent (e).

After the components had been stirred at room temperature for 1 hour, 10 parts of di-i-propoxy ethylacetoacetate aluminum as the catalyst (f) and 43 parts of water (e) were added, followed by stirring with heating at 60°C for 4 hours. Thus, a coating composition B having about 20% solid concentration was obtained. The composition B provided the storage stability of AA, coating film transparency of AA, and unpeeled crosscut average of 100.

### <Example 3>

A vessel was charged with:
60 parts of white conductive titanium oxide (SnO₂/Sb-coated TiO₂) as the fine particles (a);
32 parts of tetra-i-propoxytitanium decamer (trade name: A-10, available from NIPPON SODA CO., LTD.) as the titanium compound (b);
200 parts of methyltrimethoxysilane and 47 parts of dimethyldimethoxysilane as the silane compounds (c); and
44 parts of isopropyl alcohol as the organic solvent (e).
   Further, 300 parts of 0.3-mm zirconia beads were added, and stirring was performed at 1500 rpm for 1 hour using a beads mill to prepare a dispersion. Thereafter, 567 parts of i-propyl alcohol as the organic solvent (e) was added, and the beads were removed. Subsequently, 10 parts of di-i-propoxy ethylacetoacetate aluminum as the catalyst (f) and 50 parts of water (e) were added, followed by stirring with heating at 60°C for 4 hours. Thus, a coating composition C having about 20% solid concentration was obtained. The composition C provided the storage stability of AA, coating film transparency of AA, and unpeeled crosscut average of 100.

### <Example 4>

A vessel was charged with:
80 parts of cerium oxide as the fine particles (a);
42 parts of tetra-n-butoxytitanium heptamer (trade name: B-7, available from NIPPON SODA CO., LTD.) as the titanium compound (b);
134 parts of methyltrimethoxysilane as the silane compound (c);
36 parts of dimethylsiloxane oligomer that contained alkoxysilyl and poly(oxyethylene/oxypropylene) groups (MAC2101, available from Nippon Unicar Company Limited), as the organosiloxane oligomer (d); and
57 parts of isopropyl alcohol as the organic solvent (e).

Further, 400 parts of 0.3-mm zirconia beads were added, and stirring was performed at 1500 rpm for 1 hour using a beads mill to prepare a dispersion. Thereafter, 610 parts of i-propyl alcohol as the organic solvent (e) was added, and the beads were removed. Subsequently, 10 parts of di-i-propoxy ethylacetoacetate aluminum as the catalyst (f) and 30 parts of water (e) were added, followed by stirring with heating at 60°C for 4 hours. Thus, a coating composition D having about 20% solid concentration was obtained. The composition D provided the storage stability of AA, coating film transparency of AA, and unpeeled crosscut average of 100.

### <Example 5>

A vessel was charged with:
80 parts of zirconium oxide as the fine particles (a);
42 parts of di-n-butoxy bis(acetylacetonate) titanium as the titanium compound (b);
134 parts of methyltrimethoxysilane as the silane compound (c);
36 parts of dimethylsiloxane oligomer that contained alkoxysilyl and poly(oxyethylene/oxypropylene) groups (MAC2101, available from Nippon Unicar Company Limited), as the organosiloxane oligomer (d); and
57 parts of isopropyl alcohol as the organic solvent (e).

Further, 400 parts of 0.3-mm zirconia beads were added, and stirring was performed at 1500 rpm for 1 hour using a beads mill to prepare a dispersion. Thereafter, 577 parts of i-propyl alcohol as the organic solvent (e) was added, and the beads were removed. Subsequently, 10 parts of di-i-propoxy ethylacetoacetate aluminum as the catalyst (f) and 30 parts of water (e) were added, followed by stirring with heating at 60°C for 4 hours. Thus, a coating composition E having about 20% solid concentration was obtained. The composition E provided the storage stability of AA, coating film transparency of AA, and unpeeled crosscut average of 100.

### <Example 6>

A vessel was charged with:
120 parts of anatase-type titanium oxide as the fine particles (a);
28 parts of tetra-n-butoxytitanium decamer (trade name: B-10, available from NIPPON SODA CO., LTD.) as the titanium compound (b);
64 parts of methyltrimethoxysilane as the silane compound (c);
36 parts of dimethylsiloxane oligomer that contained alkoxysilyl and poly(oxyethylene/oxypropylene) groups (MAC2101, available from Nippon Unicar Company Limited) as the organosiloxane oligomer (d); and
72 parts of propylene glycol monopropyl ether as the organic solvent (e).

Further, 500 parts of 0.3-mm zirconia beads were added, and stirring was performed at 1500 rpm for 1 hour using a beads mill to prepare a dispersion. Thereafter, 660 parts of i-propyl alcohol as the organic solvent (e) was added, and the beads were removed. Subsequently, 5 parts of di-i-propoxy ethylacetoacetate aluminum as the catalyst (f) and 15 parts of water (e) were added, followed by stirring with heating at 60°C for 4 hours. Thus, a coating composition F having about 20% solid concentration was obtained. The composition F provided the storage stability of AA, coating film transparency of AA, unpeeled crosscut average of 100, and water contact angle of 2 degrees.

### <Example 7>

A vessel was charged with:
140 parts of anatase-type titanium oxide as the fine particles (a);
28 parts of tetra-n-butoxytitanium decamer (trade name: B-10, available from NIPPON SODA CO., LTD.) as the titanium compound (b);
31 parts of methyltrimethoxysilane and 15 parts of γ-methacryloxypropyltrimethoxysilane as the silane compounds (c) ;
24 parts of dimethylsiloxane oligomer that contained alkoxysilyl and poly(oxyethylene/oxypropylene) groups (MAC2101, available from Nippon Unicar Company Limited) as the organosiloxane oligomer (d); and
72 parts of isopropyl alcohol as the organic solvent (e).

Further, 600 parts of 0.3-mm zirconia beads were added, and stirring was performed at 1500 rpm for 1 hour using a beads mill to prepare a dispersion. Thereafter, 680 parts of i-propyl alcohol as the organic solvent (e) was added, and the beads were removed. Subsequently, 4 parts of di-i-propoxy ethylacetoacetate aluminum as the catalyst (f) and 10 parts of water (e) were added, followed by stirring with heating at 60°C for 4 hours. Thus, a coating composition G having about 20% solid concentration was obtained. The composition G provided the storage stability of AA, coating film transparency of AA, unpeeled crosscut average of 100, and water contact angle of 2 degrees.

### <Comparative Example>

A vessel was charged with:
60 parts of anatase-type titanium oxide as the fine particles (a);
200 parts of methyltrimethoxysilane and 41 parts of γ-methacryloxypropyltrimethoxysilane as the silane compounds (c) ; and
44 parts of isopropyl alcohol as the organic solvent (e).

Further, 300 parts of 0.3-mm zirconia beads were added, and stirring was performed at 1500 rpm for 1 hour using a beads mill to prepare a dispersion. Thereafter, 545 parts of i-propyl alcohol as the organic solvent (e) was added, and the beads were removed. Subsequently, 10 parts of di-i-propoxy ethylacetoacetate aluminum as the catalyst (f) and 50 parts of water (e) were added, followed by stirring with heating at 60°C for 4 hours. Thus, a coating composition a having about 20% solid concentration was obtained. The composition a exhibited very bad storage stability, and became separated and sedimented after standing for 1 hour (storage stability: CC). The coating film transparency was CC.

### INDUSTRIAL APPLICABILITY

The coating compositions obtained according to the present invention contain fine metal particles and/or fine metal oxide particles in a well-dispersed state even if the contents of the fine metal particles and/or fine metal oxide particles are high, and the compositions can give coating films of high transparency.

The coating films formed from the coating compositions exhibit high transparency and have wide applications including optical materials, catalyst materials, electronic materials, sensor materials and photocatalyst materials.

## Claims

1. A coating composition comprising:
(a) fine metal particles and/or fine metal oxide particles;
(b) at least one titanium compound selected from the group consisting of titanium alcoholates represented by the following formula (1), derivatives thereof, titanium acylates represented by the formula (1) and derivatives thereof:
R¹ ₘTi(OR²)₄₋ₘ (1)
wherein R¹ is an organic group of 1 to 8 carbon atoms and may be the same or different from each other when plural; R² is an organic group selected from the group consisting of alkyl groups of 1 to 6 carbon atoms, acyl groups of 1 to 6 carbon atoms and phenyl group, and may be the same or different from each other when plural; and m is an integer ranging from 0 to 3; and
(c) at least one silane compound selected from the group consisting of organosilanes represented by the following formula (2) and derivatives thereof:
R³ ₙSi(OR⁴)₄₋ₙ (2)
wherein R³ is a monovalent organic group of 1 to 8 carbon atoms and may be the same or different from each other when plural; R⁴ is an alkyl group of 1 to 5 carbon atoms or an acyl group of 1 to 6 carbon atoms, and may be the same or different from each other when plural; and n is an integer ranging from 0 to 3.

2. A coating composition comprising:
(a) fine metal particles and/or fine metal oxide particles;
(c) at least one silane compound selected from the group consisting of organosilanes represented by the following formula (2) and derivatives thereof:
R³ ₙSi(OR⁴)₄₋ₙ (2)
wherein R³ is a monovalent organic group of 1 to 8 carbon atoms and may be the same or different from each other when plural; R⁴ is an alkyl group of 1 to 5 carbon atoms or an acyl group of 1 to 6 carbon atoms, and may be the same or different from each other when plural; and n is an integer ranging from 0 to 3; and
(d) an organosiloxane oligomer that has an Si-O linkage and a weight-average molecular weight of 300 to 100,000, the organosiloxane oligomer containing a structure represented by the following formula (3):
- (R⁵O)ₚ-(R⁶O)_{q}-R⁷ (3)
wherein R⁵ and R⁶ are each an alkyl group of 1 to 5 carbon atoms and may be the same or different from each other when plural; R⁷ is a hydrogen atom or an alkyl group of 1 to 5 carbon atoms; and p and q are numbers of which the total (p + q) should be 2 to 50.

3. A coating composition comprising:
(a) fine metal particles and/or fine metal oxide particles;
(b) at least one titanium compound selected from the group consisting of titanium alcoholates represented by the following formula (1), derivatives thereof, titanium acylates represented by the formula (1) and derivatives thereof:
R¹ ₘTi(OR²)₄₋ₘ (1)
wherein R¹ is an organic group of 1 to 8 carbon atoms and may be the same or different from each other when plural; R² is an organic group selected from the group consisting of alkyl groups of 1 to 6 carbon atoms, acyl groups of 1 to 6 carbon atoms and phenyl group, and may be the same or different from each other when plural; and m is an integer ranging from 0 to 3;
(c) at least one silane compound selected from the group consisting of organosilanes represented by the following formula (2) and derivatives thereof:
R³ ₙSi(OR⁴)₄₋ₙ (2)
wherein R³ is a monovalent organic group of 1 to 8 carbon atoms and may be the same or different from each other when plural; R⁴ is an alkyl group of 1 to 5 carbon atoms or an acyl group of 1 to 6 carbon atoms, and may be the same or different from each other when plural; and n is an integer ranging from 0 to 3; and
(d) an organosiloxane oligomer that has an Si-O linkage and a weight-average molecular weight of 300 to 100,000, the organosiloxane oligomer containing a structure represented by the following formula (3):
- (R⁵O)ₚ-(R⁶O)_{q}-R⁷ (3)
wherein R⁵ and R⁶ are each an alkyl group of 1 to 5 carbon atoms and may be the same or different from each other when plural; R⁷ is a hydrogen atom or an alkyl group of 1 to 5 carbon atoms; and p and q are numbers of which the total (p + q) should be 2 to 50.

4. The coating composition according to any one of claims 1 to 3, further comprising a catalyst (f)

5. A coating film obtained from the coating composition of any one of claims 1 to 4.
